# EUROPÄISCHE PATENTSCHRIFT

(11) **EP 2 870 615 B1**
(45) Veröffentlichungstag und Bekanntmachung des Hinweises auf die Patenterteilung: **19.10.2016**
(21) Anmeldenummer: 13741702.8
(22) Anmeldetag: 18.07.2013
(51) Int. Cl.: H01G 4/28, H01B 11/12, H05B 3/56, H01G 4/30

(54) **VERFAHREN ZUM HERSTELLEN EINES KONDENSATORS UND KONDENSATOR**
METHOD FOR PRODUCING A CAPACITOR, AND CAPACITOR
PROCÉDÉ DE FABRICATION D'UN CONDENSATEUR ET CONDENSATEUR

(30) Priorität: 24.09.2012 DE 102012217168
(43) Veröffentlichungstag der Anmeldung: 13.05.2015
(73) Patentinhaber: Siemens Aktiengesellschaft, 80333 München (DE)
(72) Erfinder: MATZ, Richard, 83052 Bruckmühl (DE); WALTER, Steffen, 85667 Oberpframmern (DE)
(86) Internationale Anmeldenummer: PCT/EP2013/065194
(87) Internationale Veröffentlichungsnummer: WO 2014/044428

(56) Entgegenhaltungen:
- US-A- 2 785 350
- US-A- 4 109 292
- US-A- 4 319 304
- US-A- 4 551 619
- US-A- 4 593 341
- US-A1- 2004 108 311
- US-B1- 6 284 971

## Beschreibung

Die Erfindung betrifft ein Verfahren zum Herstellen eines Kondensators, insbesondere eines Zylinderkondensators. Die Erfindung betrifft weiterhin einen Kondensator sowie die Verwendung eines solchen Kondensators zur Herstellung eines Stromkabels, eines Koaxialkabels und/oder einer resonanten Heizleitung.

Für leistungselektronische Anwendungen werden zunehmend passive Bauelemente benötigt, die bei hohen Spannungen, Strömen und Temperaturen, beispielsweise bei 10 kV, 100 A und 500 °C, betrieben werden können. Insbesondere besteht Bedarf an kapazitiven Bauelementen, die eine Ladungskapazität bis in den µF-Bereich aufweisen und unter derartigen extremen Betriebsbedingungen verwendet werden können.

Aufgabe der vorliegenden Erfindung ist es, ein Verfahren zum Herstellen eines Kondensators zu schaffen, der möglichst einfach an einen Betrieb bei hohen Spannungen, Strömen und Temperaturen anpassbar ist und eine einfach einstellbare Ladungskapazität besitzt. Eine weitere Aufgabe der Erfindung ist es, einen entsprechenden Kondensator zu schaffen, der möglichst einfach an extreme Betriebsbedingungen anpassbar ist. Eine weitere Aufgabe der Erfindung ist es, eine Verwendung eines solchen Kondensators anzugeben.

Die Aufgaben werden erfindungsgemäß durch ein Verfahren gemäß Patentanspruch 1, durch einen Kondensator gemäß Patentanspruch 11 sowie durch die Verwendung gemäß Patentanspruch 14 eines Kondensators gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft ein Verfahren zum Herstellen eines Kondensators, bei welchem zumindest die Schritte a) Bereitstellen eines Grundkörpers, b) Herstellen eines Schichtsystems auf dem Grundkörper, wobei das Schichtsystem wenigstens zwei elektrisch leitfähige Schichten umfasst, die jeweils durch wenigstens eine dielektrische Schicht galvanisch voneinander getrennt werden, wobei die wenigstens eine dielektrische Schicht aus wenigstens einer Grünfolie hergestellt wird, und c) Sintern des Schichtsystems durchgeführt werden. Mit anderen Worten ist es erfindungsgemäß vorgesehen, dass ein Kondensator hergestellt wird, indem zwei oder mehr elektrisch leitfähige Schichten erzeugt werden, die beim fertigen Kondensator als Elektroden fungieren. Zwischen jeweils zwei elektrisch leitfähigen Schichten werden eine oder mehrere Grünfolien angeordnet, welche als Dielektrikum fungieren und die elektrisch leitfähigen Schichten voneinander isolieren. Unter einer Grünfolie wird dabei eine ungesinterte ("grüne") Keramik- und/oder Glasfolie verstanden. Die Grünfolie kann beispielsweise durch Foliengießen eines keramischen Materials und/oder eines sinterbaren Glasmaterials auf einem Träger hergestellt werden. Anschließend wird der Träger abgezogen, wodurch die ungesinterte Grünfolie erhalten wird. Die Erfindung ist jedoch nicht auf die Verwendung derartig hergestellter Grünfolien beschränkt, so dass auch anderweitig hergestellte Grünfolien verwendet werden können. Es kann grundsätzlich vorgesehen sein, dass eine Grünfolie oder eine elektrisch leitfähige Schicht als erste Schicht des Schichtsystems auf den Grundkörper aufgebracht wird. Ebenso kann grundsätzlich vorgesehen sein, dass eine Grünfolie oder eine elektrisch leitfähige Schicht als letzte Schicht, das heißt als Deckschicht des Schichtsystems hergestellt wird. Die Gesamtzahl der Schichten des Schichtsystems kann dabei nach Bedarf gewählt werden. Beispielsweise kann das Schichtsystem 3, 4, 5, 6, 7, 8, 9, 10, 11, 12, 13, 14, 15, 16, 17, 18, 19, 20 oder mehr Schichten umfassen, wobei jede elektrisch leitfähige und/oder dielektrische Schicht grundsätzlich ihrerseits aus mehreren Schichten desselben Materials oder abweichender Materialien aufgebaut sein kann.

Nach der Herstellung des Schichtsystems wird dieses gesintert, wodurch der hochtemperaturstabile Kondensator erhalten wird. Die Sintertemperatur hängt dabei von den verwendeten Materialien ab und kann beispielsweise bei Temperaturen zwischen etwa 800 °C und etwa 1000 °C für Grünfolien aus so genannten Niedertemperatur-Einbrand-Keramikmaterialien (Low Temperature Cofired Ceramics; LTCC) oder bei Temperaturen zwischen etwa 1500 °C und etwa 1800 °C bei Grünfolien aus so genannten Hochtemperatur-Einbrand-Keramikmaterialien (High Temperature Cofired Ceramics; HTCC) oder Glasmaterialien liegen. Die Kapazität des erfindungsgemäß hergestellten Kondensators kann durch Variierung des Schichtsystems besonders einfach an seinen jeweiligen Einsatzzweck angepasst werden und wird im Wesentlichen durch die Anzahl und Gesamtfläche der elektrisch leitfähigen Schichten, durch die Anzahl und Dicke der dielektrischen Schichten und durch die Permittivität der dielektrischen Schicht(en) nach dem Sintern bestimmt. Die Dicke der dielektrischen Schicht(en) bestimmt zudem die elektrische Durchbruchspannung des Kondensators und stellt damit einen Parameter dar, mit dessen Hilfe die Balance zwischen Kapazität und Spannungsfestigkeit des Kondensators einstellbar ist. Durch die geeignete Auswahl der verwendeten Materialen und geometrischen Abmessungen ist eine hohe Variabilität bezüglich der Kapazität und Durchbruchspannung des Kondensators ermöglicht. Somit können mit Hilfe des erfindungsgemäßen Verfahrens grundsätzlich Kondensatoren mit hohen Ladungskapazitäten bis in den µF-Bereich hergestellt werden, die eine hohe Temperaturbeständigkeit und Spannungsfestigkeit aufweisen und sich somit auch für extreme Betriebsbedingungen eignen. Darüber hinaus kann die Geometrie des Kondensators besonders einfach über die Geometrie des Grundkörpers und die Geometrie(en) der Grünfolie(en) eingestellt werden, wodurch sich der Kondensator besonders einfach an unterschiedliche Einsatzzwecke anpassen und einfach in verschiedenste Bauteile integrieren lässt.

In einer vorteilhaften Ausgestaltung der Erfindung ist vorgesehen, dass zumindest eine dielektrische Schicht aus mindestens zwei Lagen der wenigstens einen Grünfolie hergestellt wird und/oder dass die wenigstens eine Grünfolie zum Herstellen zumindest einer dielektrischen Schicht wenigstens einmal um den Grundkörper gewickelt wird. Dies stellt eine einfache Möglichkeit dar, um die Kapazität des Kondensators über die Dicke des Dielektrikums, das heißt die Dicke der dielektrischen Grünfolie(n), nämlich durch die Zahl der Lagen und/oder der Wicklungen gezielt einzustellen. Die Dicke des Dielektrikums bestimmt zudem die elektrische Durchbruchspannung des Kondensators. Beispielsweise kann vorgesehen sein, dass eine, mehrere oder alle dielektrischen Schichten jeweils aus 1, 2, 3, 4, 5, 6, 7, 8, 9, 10, 11, 12, 13, 14, 15 oder mehr Lagen und/oder Wicklungen einer oder mehrerer Grünfolien bestehen.

Weitere Vorteile ergeben sich, wenn zum Herstellen der elektrisch leitfähigen Schichten eine organische Paste verwendet wird, welche Metallpartikel enthält. Dies stellt eine besonders einfache, schnelle und flexible Möglichkeit zum Herstellen der elektrisch leitfähigen Schichten dar. Der organische Binderanteil kann beim Sintern des Schichtsystems ausgebrannt werden, wodurch die Metallpartikel einen leitfähigen Sinterverbund für die Elektroden bilden. Als Metallpartikel können grundsätzlich Elemente wie beispielsweise Silber und/oder Metalllegierungen verwendet werden.

In einer weiteren vorteilhaften Ausgestaltung der Erfindung ist vorgesehen, dass die elektrisch leitfähigen Schichten mit Hilfe eines Tauchverfahrens und/oder eines Sprühverfahrens hergestellt werden. Auch dies ermöglicht es, die elektrisch leitfähigen Schichten besonders schnell, einfach und flexibel herzustellen.

Indem der Grundkörper vor dem Sintern des Schichtsystems vom Schichtsystem entfernt wird, ist es in weiterer Ausgestaltung der Erfindung möglich, eine Ausnehmung bzw. einen Hohlraum im Kondensator herzustellen. Dies ermöglicht eine besonders einfach Integration des Kondensators in entsprechend geformte Bauteile. Darüber hinaus kann hierdurch auf die Verwendung hochtemperaturfester bzw. sinterbarer Grundkörper verzichtet und der Grundkörper für einen erneuten Verfahrensdurchlauf wieder verwendet werden.

Wenn ein zylindrischer Grundkörper verwendet wird, können die dielektrischen Schichten besonders einfach durch Wickeln erzeugt werden. Der fertige Kondensator ist dann als Zylinderkondensator ausgebildet, welcher während des Betriebs den Vorteil bietet, dass außerhalb des Kondensators zumindest weitgehend kein von ihm verursachtes elektrisches Feld existiert. Alternativ oder zusätzlich hat es sich als vorteilhaft gezeigt, wenn ein Grundkörper verwendet wird, welcher eine Oberfläche aus Polytetrafluorethylen und/oder eine Oberfläche mit einem Haftreibungskoeffizienten µ<0,70, insbesondere eine Oberfläche aus Aluminium besitzt. Eine derartige Oberflächengestaltung ermöglicht ein besonders einfaches Entfernen des Grundkörpers vor dem Sintern des Schichtsystems, so dass beispielsweise ein zylindrischer Grundkörper axial aus einem entsprechend zylindrischen Schichtsystem herausgezogen werden kann. Dabei kann grundsätzlich vorgesehen sein, dass der Grundkörper vollständig aus einem möglichst glatten Material wie beispielsweise Polytetrafluorethylen oder Aluminium besteht oder dass lediglich die Oberfläche des Grundkörpers durch Besprühen oder durch Aufbringen einer entsprechenden Folie bzw. durch Beschichten mit Aluminium oder dergleichen mit diesem glatten Material versehen ist.

In einer weiteren vorteilhaften Ausgestaltung der Erfindung ist vorgesehen, dass die elektrisch leitfähigen Schichten derart hergestellt werden, dass sie den Grundkörper alternierend auf einander gegenüber liegenden Seiten des Grundkörpers berühren. Mit anderen Worten ist es vorgesehen, dass die elektrisch leitfähigen Schichten so ausgeführt werden, dass eine erste elektrisch leitfähige Schicht auf der einen Seite des Schichtsystems bis zum Grundkörper hinunterreicht, aber auf der gegenüberliegenden Seite des Schichtsystems Abstand zur Oberfläche des Grundkörpers bzw. zum Rand der dielektrischen Schicht hält. Die auf die erste elektrisch leitfähige Schicht folgende zweite elektrisch leitfähige Schicht wird umgekehrt ausgebildet, so dass die Metallisierung auf der einen Seite des Schichtsystems Abstand zum Rand der darunter liegenden Grünfolie hält und auf der anderen Seite des Schichtsystems bis zum Grundkörper hinunterreicht. Entsprechendes gilt für alle folgenden elektrisch leitfähigen Schichten. Auf diese Weise entsteht ein mehrlagiger Kondensator, bei dem die elektrischen Kontaktflächen auf einander gegenüberliegenden Seiten des Schichtsystems liegen. Darüber hinaus bildet sich hierdurch am Grundkörper eine vergleichsweise dicke elektrisch leitfähige Schicht aus, welche sich hinsichtlich der Strombelastbarkeit des Kondensators vorteilhaft auswirkt.

In einer weiteren vorteilhaften Ausgestaltung der Erfindung ist vorgesehen, dass das Schichtsystem ausgehend vom Grundkörper radial nach außen verjüngend ausgebildet wird. Dies kann beispielsweise durch Variierung der Breite der Grünfolien erreicht werden, um eine unterbrechungsfreie seitliche Metallisierung des Schichtsystems sicherzustellen.

Weitere Vorteile ergeben sich, indem wenigstens eine Grünfolie verwendet wird, welche ein Niedertemperatur-Einbrand-Keramikmaterial und/oder ein Hochtemperatur-Einbrand-Keramikmaterial und/oder ein alkalifreies Glasmaterial umfasst. Dies ermöglicht eine besonders präzise Einstellbarkeit der Permittivität, der spezifischen Kapazität, der Durchbruchspannung und der Temperaturbeständigkeit des Kondensators. Im Fall der Verwendung alkalifreier Gläser ist eine hohe Kapazitätsdichte vorteilhaft mit einer hohen Spannungsfestigkeit kombinierbar.

Weitere Vorteile ergeben sich, indem der Kondensator nach dem Sintern in ein Stromkabel und/oder in ein Koaxialkabel und/oder in eine resonante Heizleitung integriert wird. Hierdurch können die spezifischen Vorteile des Kondensators für unterschiedliche Anwendungen mit hohen Anforderungen an die Beständigkeit des Kondensators gegenüber hohen Spannungen, Strömen und Temperaturen realisiert werden. Wenn der Kondensator als Zylinderkondensator ausgebildet ist, kann er besonders Platz sparend in Koaxialkabel und/oder resonante Heizleitungen aus alternierenden induktiven und kapazitiven Segmenten (z. B. für die Ölgewinnung) integriert werden.

Ein zweiter Aspekt der Erfindung betrifft einen Kondensator, insbesondere Zylinderkondensator, umfassend ein Schichtsystem, welches wenigstens zwei elektrisch leitfähige Schichten aufweist, die jeweils durch wenigstens eine dielektrische Schicht aus wenigstens einer gesinterten Grünfolie galvanisch voneinander getrennt sind. Die sich hieraus ergebenden Vorteile sind den vorhergehenden Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind. Dabei hat es sich als vorteilhaft gezeigt, wenn der Kondensator durch ein Verfahren nach einem der vorhergehenden Ausführungsbeispiele erhältlich und/oder erhalten ist.

Weitere Vorteile ergeben sich, wenn der Kondensator im Querschnitt zumindest im Wesentlichen kreisförmig ausgebildet ist und/oder eine zylindrische Aussparung entlang einer Bauteilachse aufweist. Hierdurch kann der Kondensator besonders einfach in zylindrische Bauteile wie beispielsweise Stromkabel, Koaxialkabel und/oder resonante Heizleitungen integriert werden. Die Aussparung kann auch zum Durchführen anderer Leitungen, beispielsweise zum Transport von Strom, elektrischen Signalen oder Kühlmittel dienen.

Ein dritter Aspekt der Erfindung betrifft die Verwendung eines Kondensators nach einem der vorhergehenden Ausführungsbeispiele zur Herstellung eines Stromkabels und/oder eines Koaxialkabels und/oder einer resonanten Heizleitung. Die sich hieraus ergebenden Vorteile sind den vorhergehenden Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- FIG 1: eine schematische Perspektivansicht eines Grundkörpers mit einer Oberfläche aus PTFE;
- FIG 2: eine schematische Perspektivansicht des Grundkörpers, um den zur Herstellung eines Schichtsystems eine Grünfolie gewickelt wird;
- FIG 3: eine schematische Perspektivansicht des Grundkörpers mit einer aus der Grünfolie hergestellten dielektrischen Schicht;
- FIG 4: eine schematische Perspektivansicht des Grundkörpers, bei welchem eine elektrisch leitfähige Schicht auf die dielektrische Schicht aufgebracht ist;
- FIG 5: eine schematische seitliche Schnittansicht eines weiteren Grundkörpers;
- FIG 6: eine schematische seitliche Schnittansicht des in FIG 5 gezeigten Grundkörpers mit einer dielektrischen Schicht und einer elektrisch leitfähigen Schicht;
- FIG 7: eine schematische seitliche Schnittansicht des Grundkörpers mit einem Schichtsystem aus zwei dielektrischen Schichten und zwei elektrisch leitfähigen Schichten;
- FIG 8: eine schematische seitliche Schnittansicht des Grundkörpers mit einem Schichtsystem aus drei dielektrischen Schichten und drei elektrisch leitfähigen Schichten;
- FIG 9: eine schematische seitliche Schnittansicht des in FIG 8 gezeigten Schichtsystems, von dem der Grundkörper abgezogen wurde;
- FIG 10: eine schematische seitliche Schnittansicht des Kondensators nach dem Sintern des Schichtsystems; und
- FIG 11: eine schematische seitliche Schnittansicht eines zylindrischen Grundkörpers, auf welchen ein Schichtsystem aus sechzehn elektrisch leitfähigen Schichten und fünfzehn dielektrischen Schichten aufgebracht ist.

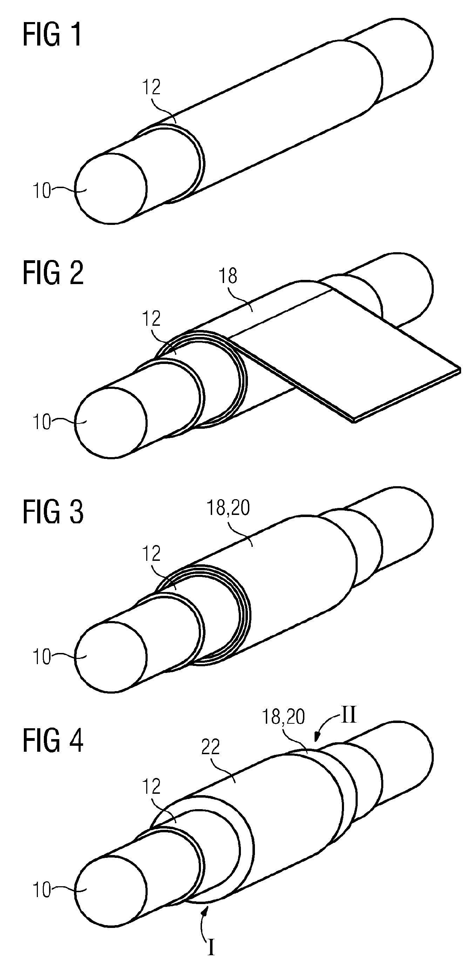

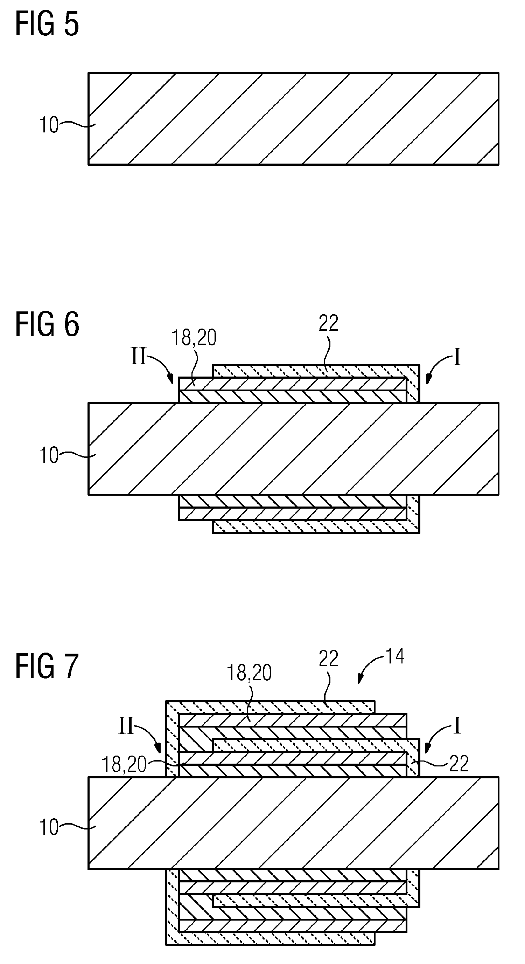

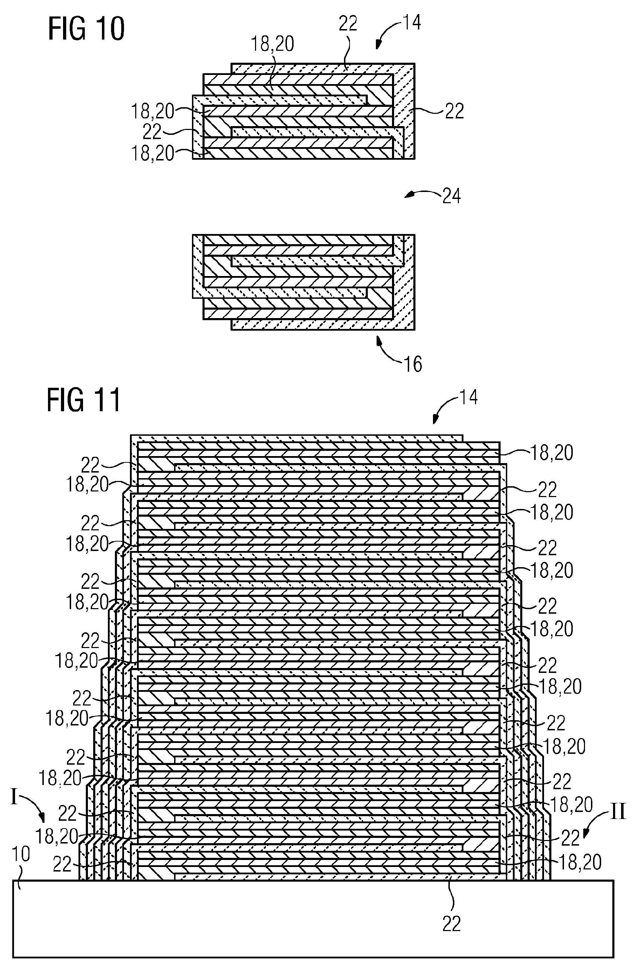

FIG 1 zeigt eine schematische Perspektivansicht eines zylindrischen Grundkörpers 10 mit einer Oberfläche 12 aus Polytetrafluorethylen (PTFE, Teflon). Die glatte Oberfläche 12 ist vorliegend als Beschichtung ausgebildet und dient dazu, den Grundkörper 10 nach dem Herstellen eines Schichtsystems 14 (s. FIG 7) axial aus dem Schichtsystem 14 herauszuziehen, bevor dieses im Ofen zum zylindrischen Kondensator 16 (s. FIG 10) gebrannt bzw. gesintert wird. Die beschichtete Oberfläche 12 kann beispielsweise durch Besprühen des Grundkörpers 10 mit Teflon oder durch Aufbringen einer Teflonfolie hergestellt werden. Alternativ kann vorgesehen sein, dass der gesamte Grundkörper 10 aus PTFE oder einem Material mit vergleichbaren Gleiteigenschaften besteht.

FIG 2 zeigt eine schematische Perspektivansicht des Grundkörpers 10, um den zur Herstellung des Schichtsystems 14 in einem ersten Schritt unter geeigneter mechanischer Spannung eine keramische Grünfolie 18 gewickelt wird, so dass die Grünfolie 18 den Grundkörper 10 außenumfänglich umschließt. Typischerweise wird der Grundkörper 10 dabei mit ein bis zehn Lagen der Grünfolie 18 umwickelt. Bei der Grünfolie 18 kann es sich um kommerziell erhältliches oder speziell entwickeltes Material handeln, das beispielsweise eine Sintertemperatur unter 900°C für die LTCC-Technik (Niedertemperatur-Einbrand-Keramikmaterialien, Low Temperature Cofired Ceramics) oder eine Sintertemperatur im Bereich 1600-1800°C für die HTCC-Technik (Hochtemperatur-Einbrand-Keramikmaterialien, High Temperature Cofired Ceramics) besitzt. Ebenso kann vorgesehen sein, dass die Grünfolie 18 ein vorzugsweise alkalifreies Glasmaterial bzw. eine Glaskeramik umfasst. Weiterhin kann vorgesehen sein, dass mehrere unterschiedliche Grünfolien 18 auf den Grundkörper 10 aufgebracht werden.

FIG 3 zeigt eine schematische Perspektivansicht des Grundkörpers 10 mit einer aus der Grünfolie 18 hergestellten dielektrischen Schicht 20, welche nach dem Sintern des Schichtsystems 14 die dielektrischen Schichten 20 des fertigen Kondensators 16 darstellen. Die verwendeten Grünfolien 18 sind daher hinsichtlich ihrer dielektrischen Eigenschaften entsprechend zu wählen.

Nach dem ersten Wickelschritt wird die aus mehreren Lagen Grünfolie 18 bestehende dielektrische Schicht 20 mit einer organischen Paste, die Metallpartikel wie beispielsweise Silberpartikel enthält, mit einer elektrisch leitfähigen Schicht 22 versehen. Die elektrisch leitfähige Schicht 22 kann beispielsweise durch Tauchen oder Sprühen hergestellt werden. Weiterhin kann vorgesehen sein, dass die elektrisch leitfähige Schicht 22 in mehreren Beschichtungsschritten hergestellt wird, wobei auch unterschiedliche Pasten, Metallpartikel oder dergleichen verwendet werden können. Die Metallisierung wird dabei so ausgeführt, dass sie abwechselnd auf der einen Seite I oder II der Schichten 20, 22 bis zum als Wickelsubstrat dienenden Grundkörper 10 hinunterreicht, aber auf der gegenüber liegenden Seite I oder II Abstand zur Oberfläche 12 des Grundkörpers 10 bzw. zum Rand der dielektrischen Schicht 20 hält. FIG 4 zeigt hierzu eine schematische Perspektivansicht des Grundkörpers 10, bei welchem eine erste elektrisch leitfähige Schicht 22 in der vorstehend beschriebenen Weise auf die dielektrische Schicht 20 aufgebracht wurde, wobei die elektrisch leitfähige Schicht 22 auf der Seite I des Grundkörpers 10 bis zu dessen Oberfläche 12 hinuntergezogen ist, auf der anderen Seite II jedoch Abstand zum Rand der Grünfolien 18 bzw. der dielektrischen Schicht 20 hält. In weiteren Wickelschritten wird vorzugsweise die gleiche oder bei Bedarf auch eine andere Lagenzahl von dielektrischer Grünfolie 18 gewickelt, die anschließend so metallisiert wird, dass die Metallisierung abwechselnd auf einer Seite I oder II Abstand zum Folienrand hält und auf der anderen Seite I oder II bis zum Wickelsubstrat, das heißt bis zum Grundkörper 10 hinunterreicht.

FIG 5 bis FIG 10 zeigen zur weiteren Erläuterung beispielhaft verschiedene Schritte während der Herstellung eines erfindungsgemäßen Kondensators 16. In FIG 5 ist zunächst eine schematische seitliche Schnittansicht eines weiteren zylindrischen Grundkörpers 10 abgebildet, wobei der Grundkörper 10 in diesem Beispiel aus einem homogenem Material wie zum Beispiel PTFE oder Aluminium besteht.

Wie in FIG 6 erkennbar ist, wird der Grundkörper 10 in der vorstehend beschriebenen Weise nacheinander mit einer dielektrischen Schicht 20 aus in Anzahl und Orientierung beispielhaften zwei Wicklungen bzw. Lagen keramischer Grünfolie 18 und einer elektrisch leitfähigen Schicht 22 beschichtet. Man erkennt, dass die elektrisch leitfähige Schicht 22 den Grundkörper 10 nur auf der Seite I berührt, auf der Seite II aber Abstand zum Rand der dielektrischen Schicht 20 hält.

FIG 7 eine schematische seitliche Schnittansicht des Grundkörpers 10 mit einem Schichtsystem 14, das zwei dielektrische Schichten 20, die aus entsprechenden Wicklungen von Grünfolien 18 hergestellt sind, und zwei elektrisch leitfähige Schichten 22 umfasst. Man erkennt, dass die elektrisch leitfähigen Schichten 22 abwechselnd auf der Seite I oder II bis auf den Grundkörper 10 heruntergezogen und durch die dielektrischen Schichten 20 galvanisch voneinander getrennt sind.

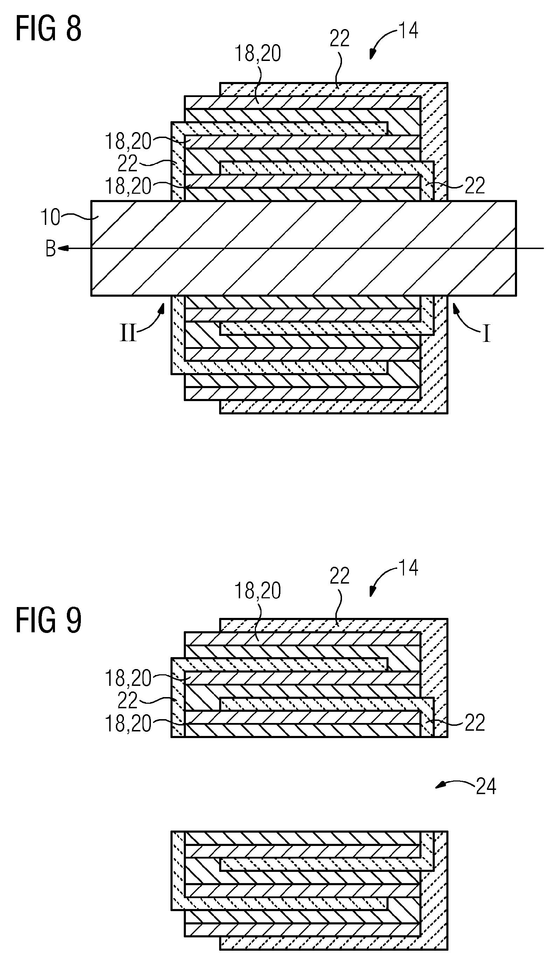

FIG 8 zeigt eine schematische seitliche Schnittansicht des Grundkörpers 10 mit einem Schichtsystem 14 aus drei dielektrischen Schichten 18, 20 und drei elektrisch leitfähigen Schichten 22. Durch entsprechende Wiederholungen von Wickel- und Metallisierungsschritten entsteht somit ein mehrlagiges Schichtsystem 14, bei dem die als spätere Kontaktflächen des Kondensators 16 dienenden elektrisch leitfähigen Schichten 20 auf den gegenüberliegenden Seiten I und II des Schichtsystems 14 kontaktiert sind.

FIG 9 zeigt eine schematische seitliche Schnittansicht des Schichtsystems 14, von dem der Grundkörper 10 vor dem anschließenden Sintern gemäß der in FIG 8 gezeigten Bauteilachse B des Schichtsystems 14 in axialer Richtung abgezogen wurde. Hierdurch entsteht eine zylindrische Aussparung 24. Der Grundkörper 10 kann dann für einen weiteren Verfahrensdurchlauf wieder verwendet werden. Je nach Ausgestaltung des Kondensators 16 kann auch vorgesehen sein, dass ein Grundkörper 10 aus einem temperaturstabilen Material verwendet und mitgesintert wird. Alternativ kann ein Grundkörper 10 verwendet werden, der sich beim Sintern zersetzt.

In Abhängigkeit der verwendeten Grünfolien 18 wird das Schichtsystem 14 nach dem Entfernen des Grundkörpers 10 beispielsweise bei etwa 900 °C zum mehrlagigen Kondensator 16 gesintert. FIG 10 zeigt hierzu eine schematische seitliche Schnittansicht des Kondensators 16 nach dem Sintern des Schichtsystems 14. Man erkennt, dass sich das Volumen des fertigen Kondensators 16 durch den Binderausbrand der dielektrischen und elektrisch leitfähigen Schichten 20, 22 etwas verringert hat.

FIG 11 zeigt einen nicht maßstäblichen Querschnitt eines zylindrischen Grundkörpers 10, auf welchen ein weiteres Ausführungsbeispiel eines Schichtsystems 14 aus sechzehn elektrisch leitfähigen Schichten 22 und fünfzehn dielektrischen Schichten 20 aufgebracht ist. Man erkennt, dass das Schichtsystem 14 im Unterschied zum vorhergehenden Ausführungsbeispiel als erste Schicht eine elektrisch leitfähige Schicht 22 aufweist, auf welcher eine dielektrische Schicht aus drei Wicklungen Grünfolie 18 aufgebracht ist. Alternativ können die untere und/oder obere elektrisch leitfähige Schicht 22 (Elektrode) aus Gründen der radialen Isolierung nach innen und außen weggelassen werden. Da die Metallisierung nach jedem Wickelschritt entweder rechts oder links bzw. auf Seite II oder auf Seite I bis zum Grundkörper heruntergezogen wird, bildet sich in der Nähe des Grundkörpers 10 eine hohe Pastendicke. Dies wirkt sich hinsichtlich der Strombelastbarkeit des Kondensators 16 vorteilhaft aus.

Die Breite der dielektrischen Grünfolien 18 kann in einer weiteren Ausführung des Kondensators 16 nach außen, das heißt mit zunehmendem Abstand vom Grundkörper 10 reduziert werden, um eine unterbrechungsfreie seitliche Metallisierung des Schichtsystems 14 sicherzustellen. Die Kapazität des Kondensators 16 wird bestimmt durch die Überlappungsfläche der rechts und links angeschlossenen Elektroden (nicht gezeigt) auf dem Umfang, im Wesentlichen also durch die Länge des zylindrischen Grundkörpers, durch die Dicke der dielektrischen Schichten 20, das heißt durch die Dicke der dielektrischen Grünfolien 18 und die Zahl der Lagen oder Wicklungen. Weiterhin wird die Kapazität bestimmt durch die Permittivität des keramischen Materials der Grünfolien 18 nach dem Sintern. Die Dicke des Dielektrikums bestimmt ebenfalls die elektrische Durchbruchspannung des Kondensators 16, stellt also den Parameter dar, mit dessen Hilfe die Balance zwischen Kapazität und Spannungsfestigkeit eingestellt wird.

Durchbruchspannungen von 10kV sind beispielsweise mit kommerziell erhältlichen, niedrig sinterbaren Glas-Keramik-Verbundfolien (LTCC) bei Dicken von 250 µm oder mit hoch isolierenden (alkalifreien) glasbasierten Grünfolien 18 mit Dicken von 30-50 µm erzielbar. Charakteristische Werte für spezifische Kapazitäten und Durchbruchspannungen verschiedener Ausführungsbeispiele des erfindungsgemäßen Kondensators 16 sind in Tabelle 1 angegeben.

**Tabelle 1: Charakteristische Werte für spezifische Kapazitäten und Durchbruchspannungen**

| | | Dicke des Dielektrikums 250 µm | | Dicke des Dielektrikums 100 µm | | Dicke des Dielektrikums 30 µm | |
|---|---|---|---|---|---|---|---|
| Material | Permittivität | Spezifische Kapazität (pF/cm ²⁾ | Durchbruchspannung (kV) | Spezifische Kapazität (pF/cm ²⁾ | Durchbruchspannung (kV) | Spezifische Kapazität (pF/cm ²⁾ | Durchbruchspannung (kV) |
| LTCC Standard | 8 | 30 | 10 | 70 | 4 | 240 | 1 |
| LTCC hoch dielektrisch | 65 | 220 | 10 | 560 | 4 | 1900 | 1 |
| alkalifreies Glas | 5 | 16 | 6 | 40 | 5 | 140 | 12 |

Die erfindungsgemäßen Kondensatoren 16 vereinen somit die folgenden Eigenschaften in sich:
- durch Auswahl von Material und geometrischen Abmessungen hohe Variabilität bezüglich Kapazität und Durchbruchspannung;
- bei Einsatz alkalifreier Gläser hohe Kapazitätsdichte mit hoher Spannungsfestigkeit kombinierbar;
- durch hohle Zylinderform Platz sparend integrierbar mit axialer Kühlung sowie in resonante Heizleitungen aus alternierenden induktiven und kapazitiven Segmenten (z. B. für die Ölgewinnung);
- hohe Temperaturbeständigkeit; und
- hohe Spannungsfestigkeit.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Herstellen eines Zylinderkondensators (16), umfassend folgende Schritte:
a) Bereitstellen eines Grundkörpers (10);
b) Herstellen eines Schichtsystems (14) auf dem Grundkörper (10), wobei das Schichtsystem (14) wenigstens zwei elektrisch leitfähige Schichten (22) umfasst, die jeweils durch wenigstens eine dielektrische Schicht (20) galvanisch voneinander getrennt werden, wobei die wenigstens eine dielektrische Schicht (20) aus wenigstens einer Grünfolie (18) hergestellt wird; und
c) Sintern des Schichtsystems (14).

2. Verfahren nach Anspruch 1,
**dadurch gekennzeichnet, dass**
zumindest eine dielektrische Schicht (20) aus mindestens zwei Lagen der wenigstens einen Grünfolie (18) hergestellt wird und/oder dass die wenigstens eine Grünfolie (18) zum Herstellen zumindest einer dielektrischen Schicht (20) wenigstens einmal um den Grundkörper (10) gewickelt wird.

3. Verfahren nach Anspruch 1 oder 2,
**dadurch gekennzeichnet, dass**
zum Herstellen der elektrisch leitfähigen Schichten (22) eine organische Paste verwendet wird, welche Metallpartikel enthält.

4. Verfahren nach einem der Ansprüche 1 bis 3,
**dadurch gekennzeichnet, dass**
die elektrisch leitfähigen Schichten (22) mit Hilfe eines Tauchverfahrens und/oder eines Sprühverfahrens hergestellt werden.

5. Verfahren nach einem der Ansprüche 1 bis 4,
**dadurch gekennzeichnet, dass**
der Grundkörper (10) vor dem Sintern des Schichtsystems (14) vom Schichtsystem (14) entfernt wird.

6. Verfahren nach einem der Ansprüche 1 bis 5,
**dadurch gekennzeichnet, dass**
ein zylindrischer Grundkörper (10) verwendet wird und/oder dass ein Grundkörper (10) verwendet wird, welcher eine Oberfläche (12) aus Polytetrafluorethylen und/oder eine Oberfläche (12) mit einem Haftreibungskoeffizienten µ<0,70 besitzt, insbesondere eine Oberfläche (12) aus Aluminium.

7. Verfahren nach einem der Ansprüche 1 bis 6,
**dadurch gekennzeichnet, dass**
die elektrisch leitfähigen Schichten (22) derart hergestellt werden, dass sie den Grundkörper (10) alternierend auf einander gegenüberliegenden Seiten (I, II) des Grundkörpers berühren.

8. Verfahren nach einem der Ansprüche 1 bis 7,
**dadurch gekennzeichnet, dass**
dass das Schichtsystem (14) ausgehend vom Grundkörper (10) radial nach außen verjüngend ausgebildet wird.

9. Verfahren nach einem der Ansprüche 1 bis 8,
**dadurch gekennzeichnet, dass**
wenigstens eine Grünfolie (18) verwendet wird, welche ein Niedertemperatur-Einbrand-Keramikmaterial und/oder ein Hochtemperatur-Einbrand-Keramikmaterial und/oder ein alkalifreies Glasmaterial umfasst.

10. Verfahren nach einem der Ansprüche 1 bis 9,
**dadurch gekennzeichnet, dass**
der Kondensator (16) nach dem Sintern in ein Stromkabel und/oder in ein Koaxialkabel und/oder in eine resonante Heizleitung integriert wird.

11. Zylinderkondensator (16), umfassend ein Schichtsystem (14), welches wenigstens zwei elektrisch leitfähige Schichten (22) aufweist, die jeweils durch wenigstens eine dielektrische Schicht (20) aus wenigstens einer gesinterten Grünfolie (18) galvanisch voneinander getrennt sind.

12. Zylinderkondensator (16) nach Anspruch 11,
**dadurch gekennzeichnet, dass**
dieser durch ein Verfahren nach einem der Ansprüche 1 bis 10 erhältlich und/oder erhalten ist.

13. Zylinderkondensator (16) nach Anspruch 11 oder 12,
**dadurch gekennzeichnet, dass**
dieser im Querschnitt zumindest im Wesentlichen kreisförmig ausgebildet ist und/oder eine zylindrische Aussparung entlang einer Bauteilachse (B) aufweist.

14. Verwendung eines Kondensators (16) nach einem der Ansprüche 11 bis 13 zur Herstellung eines Stromkabels und/oder eines Koaxialkabels und/oder einer resonanten Heizleitung.

## Claims

1. Method for producing a cylindrical capacitor (16), comprising the following steps:
a) providing a main body (10);
b) producing a layer system (14) on the main body (10), the layer system (14) comprising at least two electrically conductive layers (22) in each case galvanically isolated from one another by at least one dielectric layer (20), the at least one dielectric layer (20) being produced from at least one green sheet (18); and
c) sintering the layer system (14).

2. Method according to Claim 1,
**characterized in that**
at least one dielectric layer (20) is produced from at least two plies of the at least one green sheet (18) and/or **in that** the at least one green sheet (18) is wound at least once around the main body (10) to produce at least one dielectric layer (20).

3. Method according to Claim 1 or 2,
**characterized in that**
an organic paste containing metal particles is used to produce the electrically conductive layers (22).

4. Method according to one of Claims 1 to 3,
**characterized in that**
the electrically conductive layers (22) are produced with the aid of a dipping process and/or a spraying process.

5. Method according to one of Claims 1 to 4,
**characterized in that**
the main body (10) is removed from the layer system (14) before the layer system (14) is sintered.

6. Method according to one of Claims 1 to 5,
**characterized in that**
use is made of a cylindrical main body (10),
and/or **in that** use is made of a main body (10) which has a surface (12) made of polytetrafluoroethylene and/or a surface (12) with a coefficient of static friction of µ < 0.70, in particular a surface (12) made of aluminum.

7. Method according to one of Claims 1 to 6,
**characterized in that**
the electrically conductive layers (22) are produced in such a manner that they make contact with the main body (10) alternately on opposing sides (I, II) of the main body.

8. Method according to one of Claims 1 to 7,
**characterized in that**
the layer system (14) is formed in a manner tapering radially outward proceeding from the main body (10).

9. Method according to one of Claims 1 to 8,
**characterized in that**
use is made of at least one green sheet (18) which comprises a low temperature cofired ceramic and/or a high temperature cofired ceramic and/or an alkali-free glass material.

10. Method according to one of Claims 1 to 9,
**characterized in that**,
after sintering, the capacitor (16) is integrated in a power cable and/or in a coaxial cable and/or in a resonant heating line.

11. Cylindrical capacitor (16), comprising a layer system (14), which has at least two electrically conductive layers (22) in each case galvanically isolated from one another by at least one dielectric layer (20) made of at least one sintered green sheet (18).

12. Cylindrical capacitor (16) according to Claim 11,
**characterized in that**
it is obtainable and/or obtained by a method according to one of Claims 1 to 10.

13. Cylindrical capacitor (16) according to Claim 11 or 12,
**characterized in that**
it is formed with an at least substantially circular cross section and/or has a cylindrical cutout along a component axis (B).

14. Use of a capacitor (16) according to one of Claims 11 to 13 for producing a power cable and/or a coaxial cable and/or a resonant heating line.

## Revendications

1. Procédé destiné à la fabrication d'un condensateur cylindrique (16), comprenant les étapes suivantes :
a) mise à disposition d'un corps de base (10) ;
b) fabrication d'un système à couches (14) sur le corps de base (10), dans lequel le système à couches (14) comprend au moins deux couches électriquement conductrices (22), qui sont séparées l'une de l'autre de manière galvanique respectivement par le biais d'au moins une couche diélectrique (20), dans lequel l'au moins une couche diélectrique (20) est fabriquée à partir d'au moins une feuille d'ébauche (18) ; et
c) frittage du système à couches (14).

2. Procédé selon la revendication 1,
**caractérisé en ce que**
au moins une couche diélectrique (20) est fabriquée à partir d'au moins deux couches de l'au moins une feuille d'ébauche (18) et/ou **en ce que** l'au moins une feuille d'ébauche (18) est enroulée en vue de la fabrication d'au moins une couche diélectrique (20) au moins une fois autour du corps de base (10).

3. Procédé selon la revendication 1 ou 2,
**caractérisé en ce que**
pour la fabrication des couches électriquement conductrices (22) une pâte organique est utilisée, laquelle contient des particules métalliques.

4. Procédé selon l'une des revendications 1 à 3,
**caractérisé en ce que**
les couches électriquement conductrices (22) sont fabriquées à l'aide d'un procédé d'immersion et/ou d'un procédé de pulvérisation.

5. Procédé selon l'une des revendications 1 à 4,
**caractérisé en ce que**
le corps de base (10) est éloigné du système à couches (14) avant le frittage du système à couches (14).

6. Procédé selon l'une des revendications 1 à 5,
**caractérisé en ce que**
un corps de base cylindrique (10) est utilisé et/ou **en ce que** un corps de base (10) est utilisé, lequel possède une surface (12) en polytétrafluoroéthylène et/ou une surface (12) avec un coefficient de frottement statique µ < 0,70, en particulier une surface (12) en aluminium.

7. Procédé selon l'une des revendications 1 à 6,
**caractérisé en ce que**
les couches électriquement conductrices (22) sont fabriquées de telle sorte qu'elles touchent le corps de base (10) en alternance sur des côtés (I, II) du corps de base opposés l'un à l'autre.

8. Procédé selon l'une des revendications 1 à 7,
**caractérisé en ce que**
le système à couches (14) est configuré pour se rétrécir radialement vers l'extérieur à partir du corps de base (10) .

9. Procédé selon l'une des revendications 1 à 8,
**caractérisé en ce que**
au moins une feuille d'ébauche (18) est utilisée, laquelle comprend un matériau en céramique cuit à basse température et/ou un matériau en céramique cuit à haute température et/ou un matériau en verre exempt d'alcalis.

10. Procédé selon l'une des revendications 1 à 9,
**caractérisé en ce que**
le condensateur (16) est intégré après le frittage dans un câble électrique et/ou dans un câble coaxial et/ou dans un câble chauffant résonant.

11. Condensateur cylindrique (16), comprenant un système à couches (14), lequel présente au moins deux couches électriquement conductrices (22), qui sont séparées l'une de l'autre de manière galvanique respectivement par le biais d'au moins une couche diélectrique (20) constituée d'au moins une feuille d'ébauche frittée (18).

12. Condensateur cylindrique (16) selon la revendication 11,
**caractérisé en ce que**
celui-ci peut être obtenu et/ou est obtenu par le biais d'un procédé selon l'une des revendications 1 à 10.

13. Condensateur cylindrique (16) selon la revendication 11 ou 12,
**caractérisé en ce que**
celui-ci est configuré en coupe transversale au moins essentiellement en forme de cercle et/ou présente un creux cylindrique le long d'un axe de composant (B).

14. Utilisation d'un condensateur (16) selon l'une des revendications 11 à 13 en vue de la fabrication d'un câble électrique et/ou d'un câble coaxial et/ou d'un câble chauffant résonant.
